# EUROPEAN PATENT SPECIFICATION

(11) **EP 4 200 150 B1**
(45) Date of publication and mention of the grant of the patent: **17.09.2025**
(21) Application number: 21769656.6
(22) Date of filing: 18.08.2021
(51) Int. Cl.: B60K 7/00, B62M 6/60, B60B 27/02

(54) **ARRANGEMENT OF A DRIVE UNIT TO A WHEEL**
ANORDNUNG EINER ANTRIEBSEINHEIT AN EINEM RAD
AGENCEMENT D'UNE UNITÉ D'ENTRAÎNEMENT SUR UNE ROUE

(30) Priority: 18.08.2020 GB 202012843; 26.08.2020 GB 202013400; 18.09.2020 GB 202014787
(43) Date of publication of application: 28.06.2023
(73) Proprietor: Blue Sky IP Ltd, Edgware W1G 6NEHA8 7LW (GB)
(72) Inventor: DARWOOD, Alastair Rupert Joseph, London London W1G 6NE (GB); ZEVALDS, Mareks, Edgware HA8 7LW (GB)
(74) Representative: Schlich
(86) International application number: PCT/EP2021/072980
(87) International publication number: WO 2022/038207

(56) References cited:
- WO-A1-2012/032172
- DE-U1- 202016 104 737
- US-A- 5 433 284
- US-A- 5 558 174
- US-A1- 2004 065 495

## Description

### Field of the Invention

The present invention relates to apparatus for connecting a drive unit to a wheel, for example of a bicycle, particularly but not exclusively to a bicycle where some of the apparatus is mounted in a place of a conventional disc brake rotor. The present invention further relates to a wheel with such apparatus mounted on the wheel. The present invention yet further relates to a method of mounting parts to a hub for connecting a drive unit to the hub and to a method of attaching a drive unit, particularly but not exclusively where some of the parts are mounted in a place of a conventional disc brake rotor.

### Background to the Invention

Electric drive systems that may be fitted to conventional bicycles to assist riders in cycling are well known. A known document, US9359040, discloses such a drive system in which a disc rotor for a disc braking system is adapted to include teeth with which a gear may engage. The gear is mounted on a device, which is in turn mounted on a chainstay of a bicycle at a mounting point that is conventionally used for mounting of a brake calliper mechanism of the disc braking system, and coupled to an electric motor so that the gear can be driven by the electric motor. The disc rotor is therefore used in driving rotation of a wheel, as well as in braking.

Another known document, DE102016113572, discloses as an electric motor configured to drive rotation of a rotor of a disc braking system. In this case, a gear is affixed to the rotor and the gear is coupled to a drive shaft of an electric motor by means of a chain. The rotor is also thus used to drive rotation of a wheel, as well as for braking. The motor is mounted on a frame of the bicycle.

In both cases, the drive systems are bulky and highly visible in a congested region of a bicycle. As a result, these systems may only be fitted to specific bicycles with modification of frame mounted components. In addition, these drive systems require specific mounting features on bicycle frames, which may not be present on all such frames. It is an object of the present invention to improve on such systems.

A known patent publication, DE202016104737U1, discloses a retrofit drive system for a bicycle.

### Summary of the Invention

According to a first aspect of the present invention, there is provided apparatus for connecting a drive unit to a wheel to enable the drive unit to drive rotation of the wheel about a central axis of the wheel, comprising: a drive member for mounting to a mount of a hub of the wheel such that rotation of the drive member about the central axis drives rotation of the hub about the central axis; a mounting member mounted on the drive member and rotatably independent of the drive member with respect to the central axis; a drive element having a drive element axis that is fixedly disposed in relation to the mounting member, and for coupling to the drive unit such that the drive unit can drive rotation of the drive element about the drive element axis; preventing means for preventing rotation of the mounting member about the central axis; wherein the drive member includes coupling means coupled with the drive element, so that the rotation of the drive element drives rotation of the drive member.

The drive member provides a first side for facing away from the wheel when the drive member is mounted on the wheel, and the coupling means and the drive element are at least partially located in a recessed region in the first side.

Parts, for example the drive unit, are partially or wholly attached to and/or mounted on and/or carried by the mounting member. This eliminates or reduces need for parts to be mounted on a frame. The mounting member may be carried by the drive member.

The mounting member is mounted on the drive member so that, when the drive member is mounted on the wheel, the drive member is located between the mounting member and spokes of the wheel.

A surface of the first side of the drive member may be planar.

The coupling means and the drive element may be coupled in the recessed region, that is, portions that couple/engage may be located in the recessed region.

The drive member may comprise at least one cylindrical wall extending circumferentially around the central axis, on which the coupling means is mounted. The drive element may comprise a first gear and the coupling means may comprise a second gear engaged with the first gear such that rotation of the first gear drives rotation of the drive member.

The first gear may be mounted on the mounting member. The second gear may be an internal gear extending around the central axis, with teeth projecting inwardly. Alternatively, the second gear may extend around the central axis, with teeth projecting outwardly.

The mount is rotor disc mounting means on the hub, for example of a six-bolt or centre lock type. The rotor disc mounting means is suitable for attachment of a rotor disc of a disc braking system. The drive member comprises means for mounting to the rotor disc mounting means on the hub, and the drive member is for mounting in place of the rotor disc. The means for mounting may occupy a portion of the same space as a rotor disc conventionally would.

The drive member may include a radially extending annular rotor disc portion configured for use with a calliper mechanism of a disc braking system. The means for mounting and the annular rotor disc portion may be co-planar occupying the same space as a rotor disc conventionally would.

The apparatus may further comprise a bearing assembly between the drive member and the mounting member. The drive member and the mounting member may each be fixed to the bearing assembly enabling the mounting member to be independently rotatable of the drive member with respect to the central axis.

The drive member may be open at the first side providing access to the recessed region. The mounting member may extend across an opening of the recessed region, covering the recessed region such that the drive element is enclosed by the drive member and the mounting member.

The bearing assembly may be at least partially located in the recessed region. Alternatively, in particular but not exclusively where the mount is the disc brake rotor mount, the drive member may comprise a drive member part and adapter means. In this case, the drive member part may have the first side providing the recessed region. The adapter means may comprise: a first portion for fixing to the disc brake rotor mount, and a second portion extending from the first portion around a central axis of the hub and providing an outer circumferential surface of lesser diameter than the outer circumferential surface of the disc brake rotor mount. The annular bearing assembly may be mounted on the adapter means, directly or indirectly, in a fixed position relative thereto. For example, the drive member may be fixedly mounted on the first and/or second portions and the annular bearing assembly may be mounted on the drive member, coaxially therewith, and fixed thereto. At least some of the annular bearing assembly may be located in space at a lesser diameter than that of the outer circumference of the disc brake rotor mount.

The preventing means may be mounted, directly or otherwise, on the mounting member. The preventing means may be arranged to abut against a frame member supporting the wheel when the mounting member is rotated. Additionally or alternatively, the preventing means may be provided as a housing for the drive unit. Additionally or alternatively, the preventing means may be configured to attach to a frame member supporting the wheel when the mounting member is rotated.

The apparatus may further comprise the drive unit. The drive unit may be mounted, directly or indirectly, on the mounting member, preferably such that a mass of the drive unit can be entirely carried by mounting member.

The drive unit may be mounted on the preventing means, the preventing means being mounted on the mounting member.

The drive unit is preferably detachable, such that a drive shaft thereof is separable from the drive element and the drive unit is separable from the mounting member. The wheel may be used as such without the drive unit. The preventing means may preferably be removed or adjusted so as not to prevent rotation of mounting member.

The drive shaft of the drive unit is preferably parallel to the central axis.

There may also be provided a wheel comprising such apparatus, particularly a bicycle wheel.

According to a second aspect of the present invention, there is provided a method as defined in claim 15. After the drive unit is attached to the mounting member, the drive shaft is preferably parallel to the central axis of the wheel.

The method may further comprise attaching, using rotation prevention means, the drive unit to a non-rotatable frame member, preferably one which supports the wheel, thereby to prevent rotation of the drive unit.

The drive system, including the drive unit, may include any of the possible features of the first aspect.

There is also disclosed herein a method of connecting a drive unit to a wheel to enable the drive unit to drive rotation of the wheel about a central axis of the wheel, comprising: mounting the apparatus of the first aspect onto a wheel, including coupling the drive element and the drive unit such that the drive unit can drive rotation of the drive element.

The method may include mounting the adapter means of the first aspect to the mount, and then mounting the rest of the apparatus to the adapter means.

There is also disclosed apparatus comprising an adapter means for fixing to a mount of a hub of a wheel and for a drive system to be mounted on such that operation of the drive system can drive rotation of the adapter means and the wheel, wherein the adapter means comprises a mounting portion for the drive system having a lesser diameter than the outer circumferential surface of the mount and wherein one or more parts of the drive system is for location around the mounting portion at a lesser radial distance from a hub axis than the outer circumferential surface of the mount.

The adapter means may comprise a first portion for fixing to the mount. The mount portion ("second portion") may extend from the first portion around a central axis of the hub and provide an outer circumferential surface of lesser diameter than the outer circumferential surface of the mount, wherein the one or more parts of the drive system is for mounting around the mounting portion.

The mount may be a disc brake rotor mount. The first portion may be configured for bolting to a mount of a conventional six bolt design.

The adapter means may comprise locking means for preventing axial movement of the first and second portions relative to the hub. The locking means may comprise a lock ring configured for engagement with the second portion at an end thereof, such that the locking means locks the one or more parts in place.

The one or more parts may comprise an annular bearing assembly, which may be mounted, directly or indirectly, on the adapter means at least in part at a lesser radial distance from a hub axis than the outer circumferential surface of the mount, the annular bearing assembly being arranged to enable rotation of another part (for example a mounting member) about the hub axis independently of the adapter. Notably, where the first portion is configured for attaching to a mount of a six bolt design, mounting of the annular bearing assembly there blocks access to the bolts.

A drive member part may be fixed to the adapter means and the annular bearing assembly may be mounted on the drive member part. The drive member part may include an annular flange blocking access to the bolts. The drive member part may include a cylindrical portion for extending around the second portion, where the adapter means is arranged to lock the cylindrical portion relative to the adaptor. The annular bearing assembly may be fixedly mounted on the annular flange and/or the cylindrical portion.

There is further disclosed a method of connecting a drive unit to a wheel to enable the drive unit to drive rotation of the wheel about a central axis of the wheel, comprising: mounting the apparatus of the first aspect onto a wheel; and coupling the drive element to the drive unit such that the drive unit can drive rotation of the drive element.

### Brief Description of Drawings

Embodiments of the invention will now be described, by way of example only, with reference to the accompanying figures in which:
Figure 1 is a perspective view of a bicycle wheel with a drive system in accordance with an embodiment of the present invention fitted;
Figure 2 is a perspective view like Figure 1, but with the drive system exploded;
Figure 3 is another exploded view, like Figure 2, from a different perspective;
Figure 4 is a perspective close-up view of elements of the embodiment, with some elements shown exploded;
Figures 5 and 6 are close-up perspective views of the drive system when fitted;
Figures 7 and 8 are views of a bicycle with the fitted drive system;
Figures 9 and 10 are views of a bicycle with the fitted drive system and electric motor and mounting apparatus removed;
Figure 11 is a first side view of a drive member of the drive system;
Figure 12 is a perspective view of the second side of the drive member;
Figure 13 is a perspective view of a mounting member of the drive system; and
Figure 14 is a side view of the mounting member;
Figure 15 is a perspective view of a drive member in accordance with an alternative embodiment;
Figure 16 is a cut through view of a hub and a drive system in accordance with alternative an embodiment.

### Detailed Description of Embodiments

Embodiments of the invention relate to apparatus for a drive system for driving rotation of a wheel, in particular to apparatus for connecting a drive unit of the drive system to the wheel. The drive system is typically for use to supplement human power driving a wheel, for example pedalling action, but may be used as an alternative to human power or to supplement means other than human power used for driving a wheel.

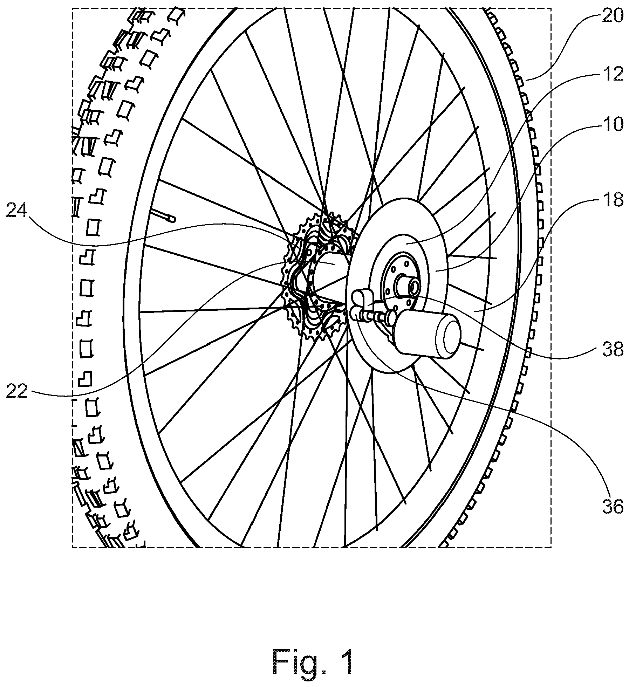

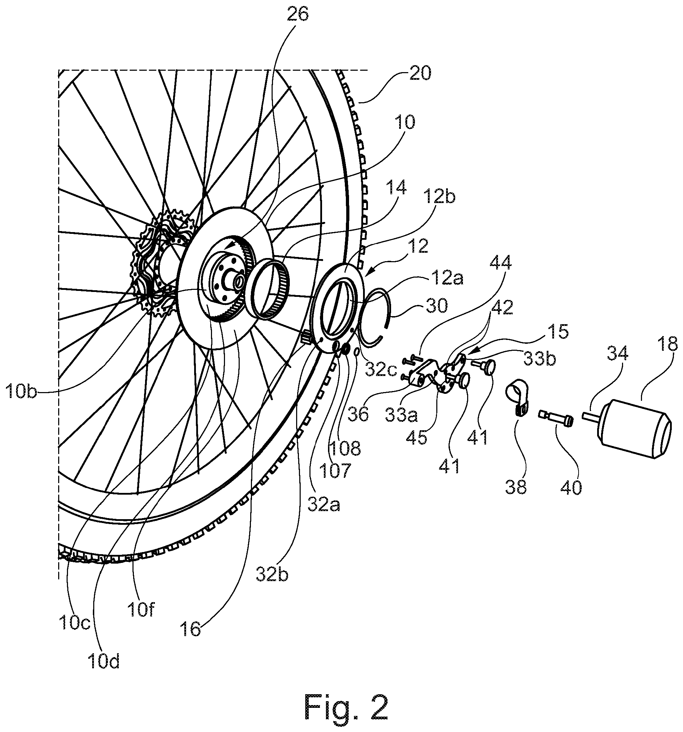

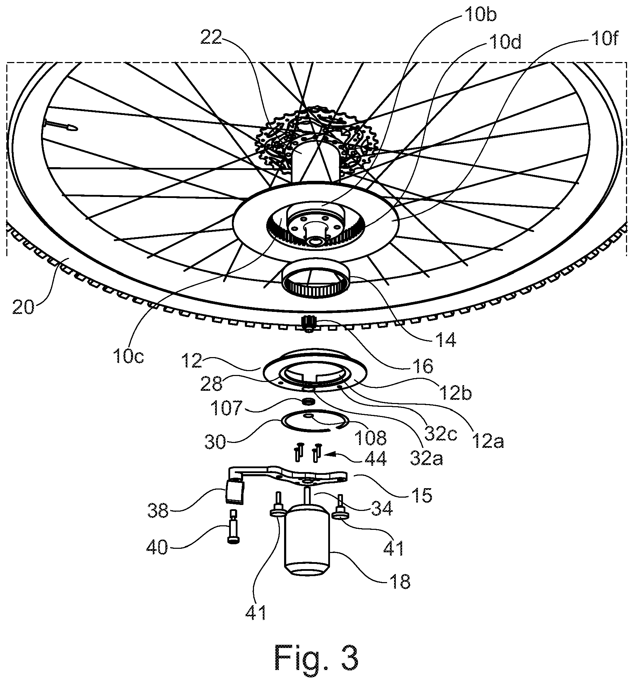

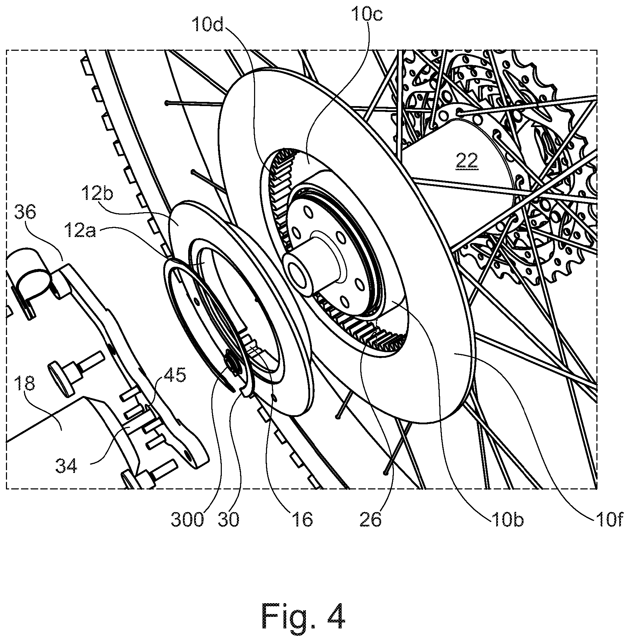

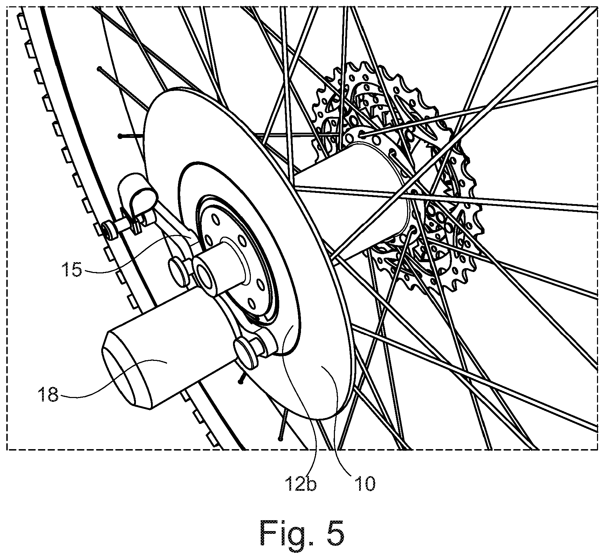

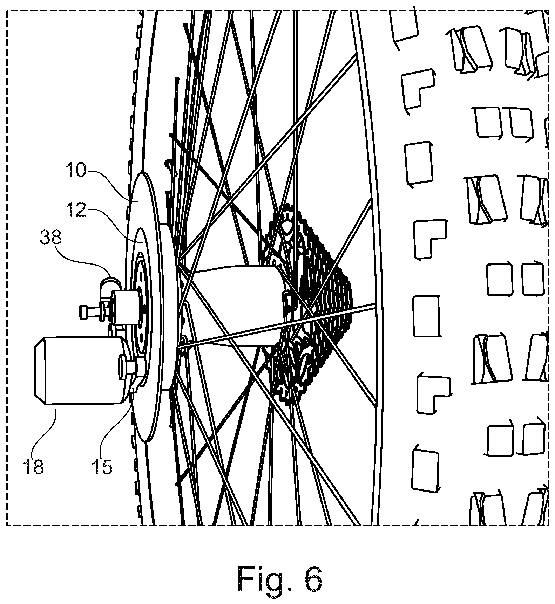

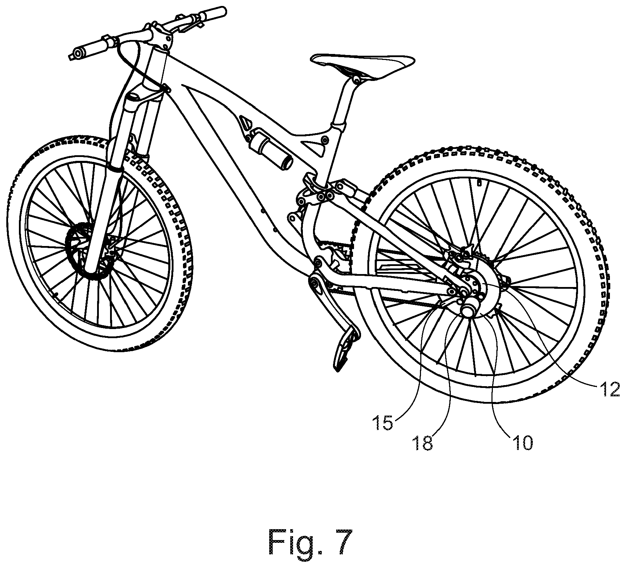

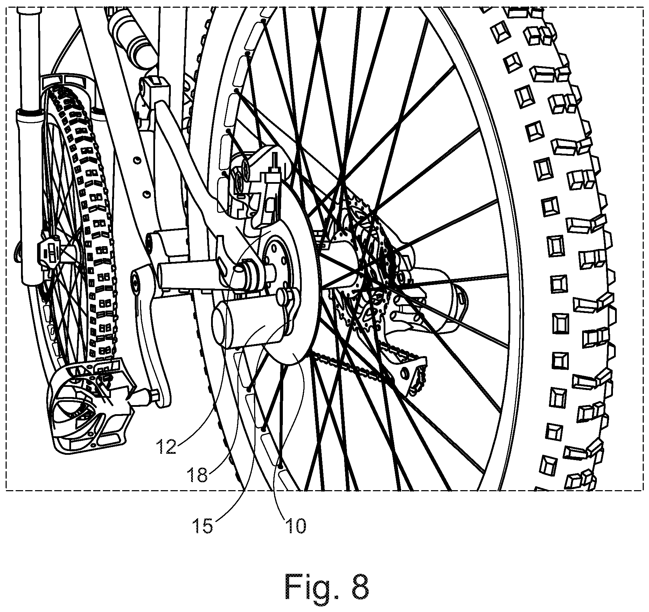

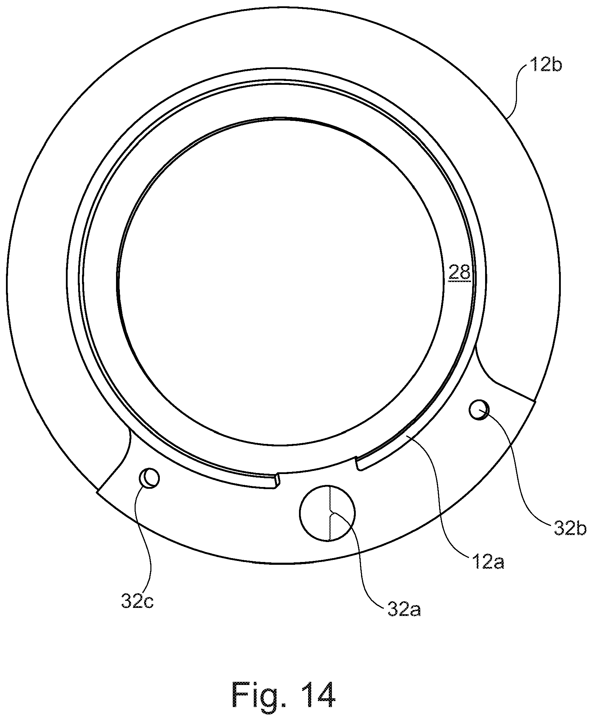

Referring to Figures 1 to 14, in an embodiment the drive system includes a drive member 10, a mounting member 12, an annular bearing assembly 14, a rotation prevention assembly 15, a drive element in the form of a pinion gear 16, and the drive unit in the form of an electric motor 18. The drive system is mounted onto a rear wheel 20 of a bicycle. The wheel includes a hub 22 and a cassette 24. An axle (not shown) extends through the hub 22 and the cassette 24 about which the hub rotates. The drive system may alternatively be mounted on a front wheel of a bicycle.

Embodiments are also not limited to use with an electric motor. Embodiments may be implemented with any device from which torque can be transferred to the drive element. For example, embodiments may couple to a drive shaft of a motor in the form of an internal combustion engine.

The wheel has an axis about which the wheel rotates and the term "central axis" shall be construed accordingly. The term "hub axis" is to be construed as the same axis. The terms "outer", "inner", "external" and "internal" are to be construed in relation to the hub axis unless otherwise indicated by context.

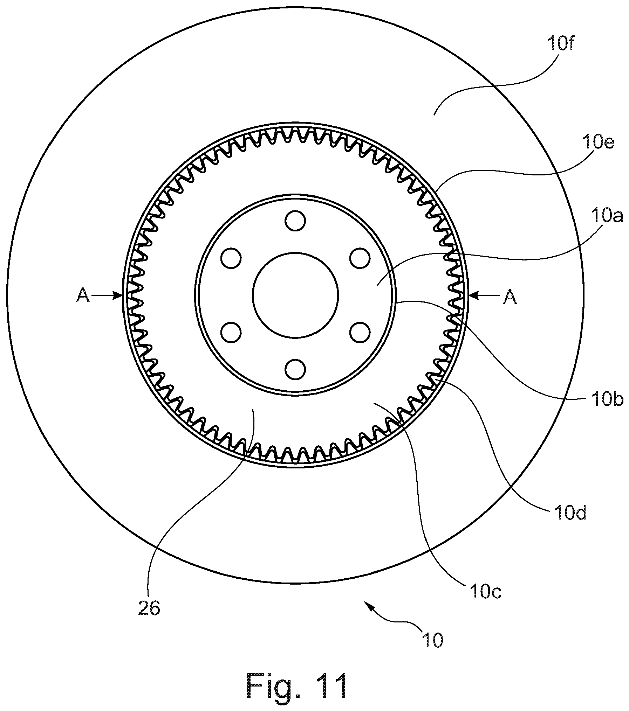

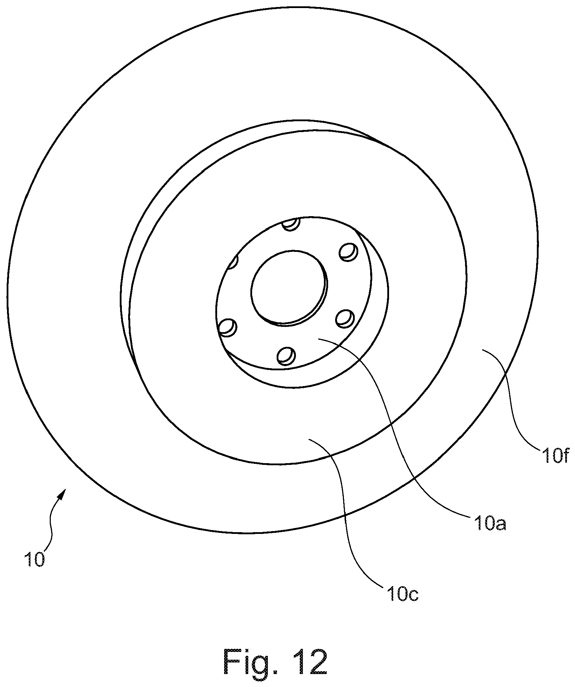

The drive member 10 is located on the hub 22 where a conventional disc rotor is conventionally mounted and the disc rotor is absent. The drive member 10 has a first side that faces outwardly away from spokes of the wheel and a second side that faces the spokes. Herein "spokes" are to be construed as covering any arrangement that functions as spokes, including arrangements where elongate members spanning between a rim and a hub are integrally formed with the rim and/or the hub and also where the spokes are replaced by a disc spanning between a rim and a hub. As best seen in Figures 11 and 12, the drive member 10 includes a mounting portion, an annular back plate 10c, an internal gear 10d, a second cylindrical wall 10e and an annular braking rotor portion 10f. The mounting portion includes a drive member mounting plate 10a. The mounting portion also includes a first cylindrical wall 10b having a cylindrical outer circumferential surface. The first cylindrical wall 10b extends at a first end thereof from the drive member mounting plate 10a towards the spokes of the wheel. The annular back plate 10c extends from a second end of the first cylindrical wall 10b radially outwardly with respect to the hub axis. The second cylindrical wall 10e extends from the annular back plate 10c away from spokes of the wheel at a first end thereof. The first and second cylindrical walls 10b, 10e are both coaxial with the hub 22. The internal gear 10d is mounted on the annular back plate 10c and on an internal surface of the second cylindrical wall 10e, facing the outer surface of the first cylindrical wall 10b. The first and second cylindrical walls 10b, 10e are spaced to provide an annular recessed region 26 between them, in part of which the internal gear is located. In some variant embodiments, the internal gear 10d is mounted on the annular back plate 10b or on an internal surface of the second cylindrical wall 10e.

The drive member 10 may be formed of a single piece of material. In variant embodiments the drive member 10 may be formed of more than one piece of material. In some variants, the internal gear 10d may be formed separately and fixed to a rest of the drive member 10 by welding or by any suitable manner of affixing, or in some embodiments by locking of corresponding portions (not shown) in the internal gear 10d and the drive member 10 suitably adapted for such locking. In some variants, the braking rotor portion 10f may be formed separately and fixed to the rest of the drive member 10 by welding or any suitable manner of affixing, or in some embodiments by locking of portions suitably adapted for locking. The drive member 10 may be otherwise formed of different parts that are fixed together in other variant embodiments. Making the drive member 10 of multiple parts facilitates different parts being made of different materials.

The hub 22 is of a conventional type and includes a conventional disc rotor mount (not shown) configured to enable mounting of a matching conventional disc rotor configured for mounting on the disc rotor mounting means. The mount is according to a conventional six bolt design. A conventional disc rotor configured for the six bolt design may be securely bolted to the mount and used in a conventional disc braking system. When the conventional disc rotor is mounted on the mount, relative rotation of the disc rotor and the hub 22 is thus prevented so the disc rotor and the hub 22 rotate synchronously and calliper action on the disc rotor by a calliper mechanism brakes rotation of the wheel.

In the drive member 10, the drive member mounting plate 10a has holes in accordance with the six bolt design, like a conventional disc rotor. The drive member 10 can thus be securely bolted to the mounting plate in place of the conventional disc rotor. A conventional disc rotor, must be removed from the mount of the hub, if attached, to enable this and to permit the drive member 10 to be located on the hub 22. The drive member 10 may also be removed from the mounting plate and replaced if it wears out. The bolting of the drive member 10 to the mount prevents relative rotation of the drive member 10 and the hub is such that the drive member 10 and the hub 22 rotate synchronously.

Hubs of other types are known that do not use a mount with a six bolt design for mounting of a disc rotor on the hub, but instead include alternative disc rotor mounts. The drive member 10 may in variant embodiments be configured to attach to such mounts. For example, a mount and conventional disc rotor (not shown) may use a centre lock design, in which the mount includes a male spline and the conventional disc rotor includes a corresponding female spline. The male and female splines are configured to mate, thereby to permit the conventional disc rotor to be located on the hub and removed from the hub by relative axial movement. The drive member (specifically, the drive member mounting plate 10a thereof) may be configured with the same female spline and located and removed in the same way. The male and female splines prevent relative rotation of the drive member and the hub so the drive member and the hub rotate synchronously. A lock ring may be conventionally used to lock a splined disc rotor in place to prevent the relative axial movement and the same may be used to lock such a drive member in place.

In alternative non-claimed embodiments, the drive system described above may be mounted to a hub of a wheel that uses conventional rim brakes. In this case, a hub of the wheel is adapted to include a mount to which the mounting plate 10a can be mounted. The mount may be in accordance with a six bolt design or a centre lock design or other design used with conventional disc rotes, and thus be identical to a mount for mounting of conventional disc rotors. Alternatively, the mount may be to a different design, for example a seven bolt design, and the mounting plate 10a may be configured correspondingly. In such embodiments, the annular braking rotor portion 10f may be absent.

In alternative non-claimed embodiments, a freehub body of the hub may serve as a mount for the drive member. The mounting plate 10a may be adapted for mounting on the freehub body in place of one or more sprockets, such that rotation of the drive member in a forwards direction drives rotation of the hub. the drive member 10 may be otherwise mounted on the hub so as to drive rotation of the hub. Where the drive member is not to replace a conventional rotor disc, the annular braking rotor portion 10f serves no purpose and can thus be omitted.

Herein it should be understood that the mount is part of the hub. Notably, mounts for disc brakes are made as integral parts of hubs by major manufacturers such as Shimano ^{®}. Such mounts are typically in accordance with six bolt and centre lock designs. The hub 22, spokes and rim of the wheel 20 are functionally distinct parts common to all wheels. This is true regardless of whether the two or all of these parts are formed together.

The braking rotor portion 10f extends radially from a second end of the second cylindrical wall 10e. The braking rotor portion 10f is for location in the same space as an annular outer portion of a conventional disc rotor and has the same circular outer diameter or a similar circular outer diameter that can be accommodated by the disc braking system. The drive member 10a is configured so that the disc braking system remains functional after the disc rotor is replaced with the drive member 10 and a calliper of a disc braking system can press against the braking rotor portion 10f to cause the braking. The thickness of the braking rotor portion 10a is such that the braking rotor portion can function with the disc braking system and may be the same as that of a rotor disc, for example 1.7mm.

The mounting plate 10a and the annular braking rotor portion 10f are co-planar. The drive member 10 has a first side that, when the drive member 10 is mounted on the hub, faces outwardly away from spokes of the wheel. It is not essential that these parts are planar to all embodiments. The first and second cylindrical walls 10b, 10e and the annular back plate 10c provide the annular recessed region 26 extending around the central axis of the hub 22. When mounted on a wheel, an open side of the recess 26 formed in the drive member 10 faces away from the wheel. The annular recessed region 26 is sufficiently wide (along line at A-A in Figure 11) as to accommodate the pinion gear 16 and the internal gear 10d in engagement, but not so wide as to interfere with operation of the braking rotor portion 10f where the braking rotor portion 10f enters the calliper. The drive member 10 may have a maximum depth of only 2-3mm, which is sufficient to accommodate the pinion gear 16 and the internal gear 10d, although there is typically space at the back wheel of a bicycle for the drive member 10 to be deeper, for example where a deeper annular recess is wanted.

There is typically little space between the first side of a conventional disc brake rotor, that is, the side facing away from the wheel, and the frame of a bicycle. The annular recessed region 26 usefully provides space for the pinion gear 16 and the internal gear 10d to be located so that a drive shaft for the pinion gear 16 can extend away from the wheel. Notably, a system described in a known patent publication, DE102016113572B3, describes location of gears between a device and a wheel in an attempt to avoid the issue of space, but has various disadvantages over provision of the recessed region 26 to provide space for the pinion gear 16 and the internal gear 10d.

In some embodiments, the pinion gear 16 and the internal gear may only be partially mounted in the recessed region 26, and may extend through the open side of the recessed region 26 away from the wheel. It may also be noted that the drive member 10 need not be configured to provide such an annular recessed region . Other configurations are possible. For example, the drive member may be substantially planar and the internal gear may be mounted on the drive member, to project from it. However, in this case the internal gear and the mounting member 12 would have to be very thin to prevent contact with the frame.

The annular back plate 10c usefully protects the internal gear 10d and the pinion gear 16 from dirt, and preferably seals the recess 26 between the recess 26 and the wheel. Usefully, the drive member 10, including the annular back plate 10c, and the mounting member 12 together enclose the pinion gear 16 and the internal gear 10d, preventing ingress of dirt. In variant embodiments the annular back plate 10c and/or the mounting member 12 may have spaces therein; although dirt may ingress through such spaces weight of parts may be reduced.

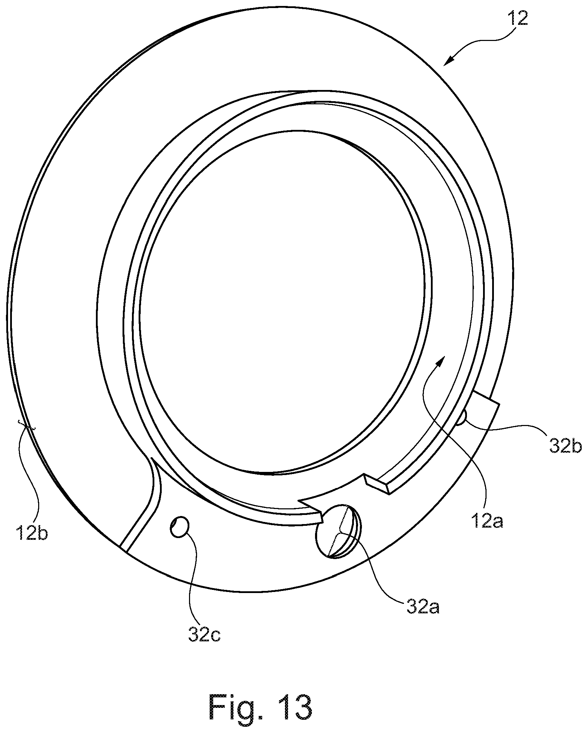

As best seen in Figure 13, the mounting member 12 comprises a cylindrical portion 12a located in the recessed region 26 and an annular mounting plate 12b extending outwardly from the cylindrical portion 12a with respect to the hub axis. The annular bearing assembly 14 is located in the recessed region 26 between the cylindrical portion 12a and the first cylindrical wall 10b, which has a cylindrical outer surface. The cylindrical portion 12a is fixed to an outer surface of the bearing assembly 14 and the inner surface of the bearing assembly is fixed to the cylindrical outer surface of the first cylindrical wall 10b. The mounting member 12 is thus mounted on the first cylindrical wall 10b via the bearing assembly 14, and the drive member 10 can rotate freely with respect to the mounting member 12 about the hub axis and vice versa. The annular mounting plate 12b locates flush against the first side of the drive member 10.

The mounting member 12 has an annular step 28 formed in it, for facing away from the wheel 20, which extends circumferentially around the hub 22. The drive system includes a circlip 30 located in an annular space provided by the annular step 28, the circlip 30 gripping the exterior of the first cylindrical wall 10b. The circlip 30 prevents lengthwise movement of the mounting member 12 with respect to the hub axis, but permits rotational movement. As will be appreciated, the annular step 28 is provided for compactness.

The mounting plate 12b has three holes 32a-c in it. A shaft of the pinion gear has an end that locates in the first of these holes 32a. A drive shaft 34 of the motor 18 extends through a first of these holes 32a and fixedly mates with the shaft of the pinion gear 16. The pinion gear 16 is thus mounted on the end of the drive shaft 34 in the annular recessed region 26. The first hole 32a is provided with a recessed opening in which a bearing 107 is located and through which the shaft of pinion gear 16 also extends. A circlip 108 clamps onto the pinion gear shaft and secures the pinion gear 16 at the hole 32a. The shaft of the pinion gear 16 thus is in a fixed disposition relative to the mounting member 12. A rotational axis of the pinion gear 16 is parallel to the hub axis. The drive shaft of the motor 18 is thus also parallel to the hub axis. In variant embodiments, the pinion gear 16 may be otherwise mounted to the mounting member 12. The pinion gear 16 (or a shaft thereof) may have a keyway by which a drive shaft of the motor 18 can detachably connect to the pinion gear 16. Alternatively, the pinion gear 16 may be fixed to the end of the drive shaft 34 and the mounting member 12 adapted to receive the pinion gear 34 in the recessed region 26 when so attached.

A rotation prevention assembly 15 comprises an arm 36, a stop element 38, stop element mounting bolts 40 and a plurality of motor mounting bolts 44. The stop element 38 is mounted on an end of the arm 36 by means of a mounting hole therein and the stop element mounting bolt 40. The arm 36 includes two holes 33a, 33b that align with holes 32b, 32c, which are threaded, in the mounting plate 12b. The rotation prevention assembly is mounted on the mounting plate 12b by means of bolts 41 each extending through respective aligned holes 32b, 32c, 33a, 33b. In variant embodiments, the rotation prevention assembly is otherwise mounted to the mounting member 12 by alternative fixing means.

The arm 36 also has four motor mount holes 42 therein. The motor 18 is mounted on the arm 36 by means of four bolts 44 that extend though the four motor mount holes 42 and engage in threaded holes (not shown) in a body of the motor 18. The motor 18 is detachably and reattachably mounted to the rotation prevention assembly 15 by means of motor mounting bolts 44. When so mounted, the shaft 34 passes through hole 45 as well as through the hole 32a. The shaft 34 is thus synchronously connected to the shaft of pinion gear 16 which is secured to mounting plate 12b by the bearing 107 and the circlip 108. The motor 18 is thus fixedly mounted on and carried by the rotation prevention assembly 15. In variant embodiments, the motor 18 may be otherwise mounted to the rotation prevention assembly 15, or directly to the mounting member 12, by alternative fixing means. The motor 18 may include a battery, or alternatively be coupled to a battery located elsewhere on the bicycle.

The arm 36 and the stop element 38 are shaped for the stop element 38 to abut a chainstay of the bicycle when the mounting member 12 rotates, which prevents further rotation of the mounting member 12 and all parts mounted on the mounting member 12, including the motor 18. Where the drive system is mounted on a front wheel of a bicycle for driving rotation of the front wheel, the stop element 38 instead abuts a fork. In variant embodiments where the electric drive system is implemented on a wheel other than on a bicycle wheel, the stop element 38 may abut a frame member on which the wheel is mounted or any other frame member or object that moves translationally with the wheel but not rotationally.

It is noted above that the drive member 10 need not be configured to provide an annular recessed region, and that the drive member may be substantially planar with the internal gear mounted on the outward facing side of the drive member, projecting from it. Where the drive member 10 is in place of a conventional disc rotor, the internal gear and the mounting member 12 would have to be very thin to prevent contact with the frame. However, where the hub is designed specifically for mounting of the drive system, there may be more space available.

The drive member 10, the mounting member 12, the anti-rotation assembly 15, the pinion gear 16 and various bolts may be made from steel or another suitable material. The stop element 38 is preferably formed of a material sufficiently soft as to avoid damage to the chainstay, for example a plastic material or a hard material with a soft, e.g. rubber, outer. The other parts may be made from other materials including metals and plastics, as would be apparent to the skilled person.

The stop element 38 and/or the arm 36 may be configured to be adjustable in length, for example, by means of adjustment screws or varying stop element sizes, so as to ensure acceptable contact with the frame chainstay.

In operation, the motor 18 operates to drive rotation of the pinion gear 16. The pinion gear 16 drives rotation of the internal gear 10d, thus driving rotation of the driving member 10. The driving rotation of the internal gear 10d in one direction results in force on the mounting member 12 urging rotation in the opposite direction. The mounting member 12 thus pivots until the stop element 38 abuts against the chain stay or other fixed portion of the bicycle frame.

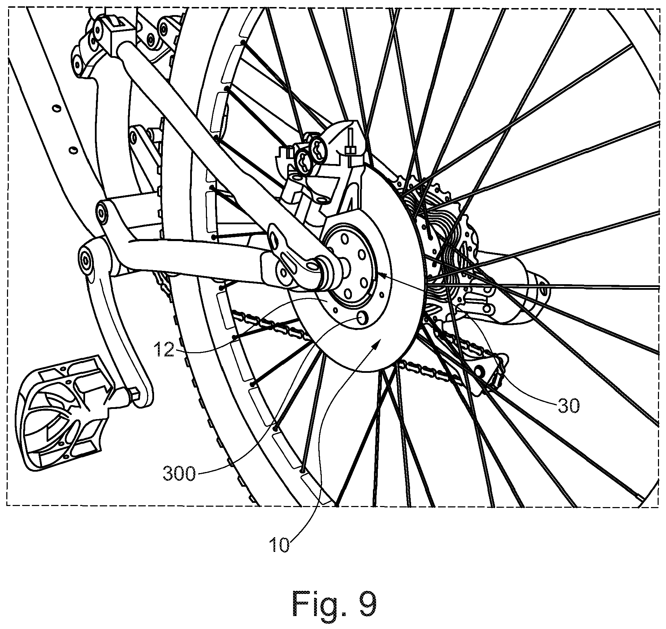

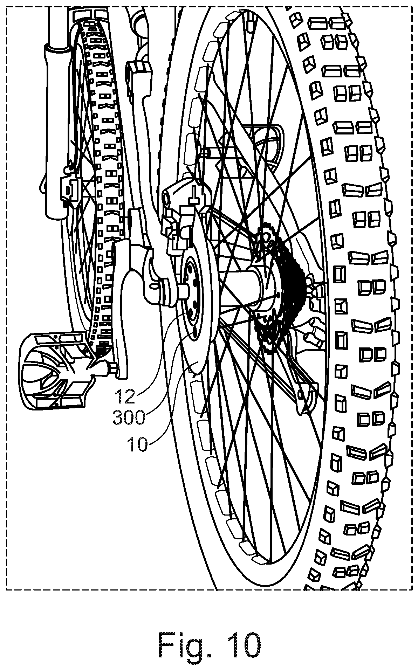

The motor 18 may be removed together with the rotation prevention assembly by removal of bolts 41. The motor 18 shown removed in Figures 9 and 10. The drive shaft of the motor 18 may simply be withdrawn, to disengage it from the pinion gear 16. The motor 18 may be reattached in a reverse operation, thereby to engage with the pinion gear 16, and the bolting of the bolts 41. An opening of a pinion shaft socket 300 is shown in Figures 9 and 10, configured to receive the motor shaft 34 when the motor 18 is required (optionally by means of a keyway, as mentioned above).

In a further embodiment, the stop element 38 may be configured to mount to the bicycle seat stay (not shown). As the seat stay is reached by pivoting in the opposite direction, in use, stop element 38 is not driven into the seat stay; rather, it is pulled away from the seat stay thus the stop element 38 is mountable to the seat stay by means of a clamp or elastic or other non-elastic securing mechanism configured to prevent separation.

In a variant embodiment, the stop element 38 is absent and instead an attachment is provided securing the arm 36 to the chainstay. The attachment may, for example, be in the form of a clamp or strap around the chainstay, also attached to the arm 36 by a bolt or other suitable means. Notably, the arm 36 is not required for mounting of the motor 18, but rather the rotation prevention assembly 15 including the arm 36 is provided to counter the resultant torque generated by the mounted motor 18. The arm 36 may in a variant embodiment be mounted on the mounting member 12 independently of the motor 18. As described below, the motor 18 need not be carried by the mounting member 12. The stop element 38 and optionally the arm may alternatively be replaced with other means for attaching the mounting member 12 to the chainstay or other frame member to prevent rotation of the mounting member 12. For example, such attaching means may be in the form of straps with hook and loop material.

In a variant embodiment, the motor 18 and any associated housing (not shown) may act as a stop element. In this embodiment, the motor and associated housing may protrude away from the wheel lengthwise with respect to the central axis of the wheel and offset from the central axis by a distance that is further than the chainstay. In this way rotation of mounting element 12 will cause the motor and associated enclosure to directly impact the chainstay. Motor enclosure hardware may be adapted to facilitate acceptable contact with the chainstay. Such motor enclosure hardware may also include means to attach to the chainstay, for example comprising securing means such as a clamp or elastic line. In this variant embodiment, the motor may be directly attached to mounting plate 12b without need of rotation prevention assembly 15.

In a variant embodiment, the motor 18 is not attached to the arm 36 by the bolts 44. Instead, the motor 18 is attached using a quick release mechanism, so that the motor 18 can be quickly detached and reattached. In an alternative variant embodiment, the arm is not attached to the mounting plate 12b by the bolts 41, but instead is attached using a quick release mechanism such that the arm and all parts carried by the arm 36 can be quickly detached and reattached.

Detailed description of operation and control functions of the motor are outside the scope of this disclosure. The motor may be operable by the user to initiate provision of torque to the wheel and to cease provision. The motor may be configured to provide torque under certain conditions, for example when a user is providing torque through a pedalling action.

In a variant embodiment, the motor 18 and an associated battery (not shown) are otherwise located on the bicycle, for example under a saddle. In this case, the motor 18 is coupled with the pinion gear 16 to drive the pinion gear 16 using a coupling mechanism. In an example a flexible drive shaft couples the drive shaft 34 of the motor 18 and the gear 16. Such a flexible drive shaft (not shown) is located in a sheath (not shown). An end of the sheath may be fixedly mounted to the mounting member 12 around the hole 32a and the drive shaft within the sheath is coupled to the pinion gear 16 via the hole 32a. In another example, the pinion gear 16 is coupled to a gear on the opposite side of the mounting member 12 to the pinion gear 16, via the hole 32a. A drive shaft (flexible or otherwise) extends from the motor 16 to drive the gear and thus the pinion gear 16. The gear may be a bevel gear, allowing the drive shaft to arrive at the gear at a non-aligned angle, but is not limited to being of any particular type.

The pinion gear 16 is a spur gear, but variant gears may be used in variant embodiments.

In embodiments, the annular bearing assembly 14 may be absent. In this case a similar low friction arrangement may be provided fixing together the drive member 10 and the mounting member, but allowing independent rotation.

It should be understood that the recessed region is a region of space set back towards the spokes with respect to a plane where an outward facing surface of a disc rotor would conventionally be located. It has already been mentioned that the annular braking rotor portion 10f may be omitted. Alongside this, in some variant embodiments it is possible to omit the second cylindrical wall 10e, provided sufficient structural support is provided for the mounting member 12. Further, in other variant embodiments, it may be possible to omit the annular back plate 10c.

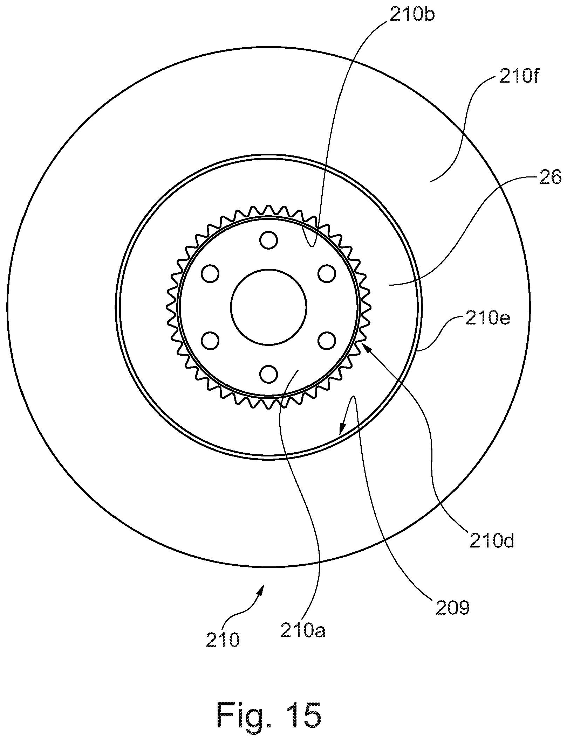

As an alternative to the internal gear and the pinion gear 16, other gear arrangements may be used. Referring to Figure 15, in an alternative embodiment parts functionally corresponding to those of the embodiment described in relation to Figures 1 to 14 are given the same reference number incremented by 200. The internal gear 10d is absent and instead a gear is provided on the exterior of the first cylindrical wall 210b, that is, teeth 210d are provided on the exterior surface thereof. An annular bearing assembly (not shown), like the bearing assembly 14, is fixed against a circumferential interior surface of the second cylindrical wall 210e of the drive member 210. The annular portion (not shown) of the mounting member 212 is adapted and located to fit flush against an interior surface of an annular bearing assembly (not shown) and is fixed thereto. The annular bearing assembly facilitates relative rotation movement of the mounting member 212 and the drive member 210 about the hub axis.

In another variant embodiments, a ratchet may be provided on the annular back plate 10c extending circumferentially around the hub axis. In place of the pinion gear 16, a bevel gear may be provided to engage with the ratchet.

In other embodiments, instead of the internal gear 12c, a spur gear may be provided elsewhere fixed to the drive member 12, or formed integrally therewith, to rotate coaxially with the drive member 12 about the hub axis, and the pinion gear 16 mounted to drive rotation of the spur gear. In a variant, the drive member may include teeth of a spur gear around a periphery thereof and the pinion gear 16 may be mounted to drive rotation of such a spur gear and thus the drive member. Other designs for linking a drive shaft of a motor to a drive member are disclosed in US9359040 and embodiments in accordance with the present invention may incorporate such designs, while retaining a mounting member carried by a drive member and being independently rotatable with respect thereto, with a drive unit 18 mounted on the mounting member.

Embodiments of the invention are not limited to any particular way in which the drive shaft of the drive unit is linked to the drive member to drive rotation of the drive member about the hub axis, provided a mounting member is carried by a drive member and is independently rotatable with respect thereto, with a drive unit 18 mounted on the mounting member. A friction drive or a belt drive arrangement may also be used in alternatives.

In a variant embodiment, the arm 36 may be hingedly mounted on the mounting member 12, and arranged to abut the chainstay when opened. The arm 36 may be folded away when required and secured in place with a clip.

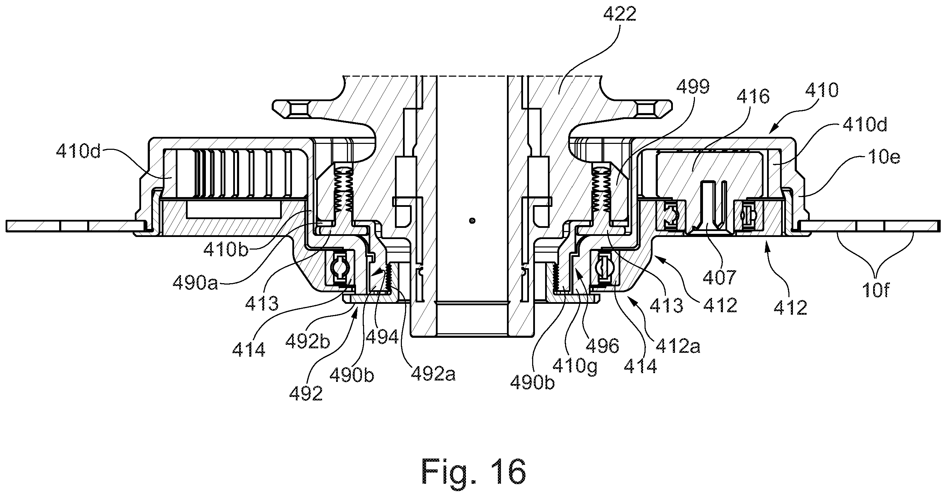

The bearing assembly 14 described above with reference to Figures 1 to 14 and 15 occupies space in the recessed region between the first and second cylindrical walls 10b, 10f. Referring to Figure 16, in an alternative embodiment of the drive system, the drive system includes parts that are the same as or functionally correspond to those in embodiments described above with reference to Figures 1 to 14, including a mounting member 412, an annular bearing assembly 414 and a pinion gear 416, as well as a drive unit (not shown). Such parts are given the same reference number incremented by 400. In the embodiment shown in Figure 16 however, the drive member includes a drive member part 410 and an adapter assembly. The adapter assembly comprises an adapter and a lock ring 492.

The annular bearing assembly 414 is not located in the recessed region, but is instead located adjacent the first side of the drive member part 410. A mount 499 of the hub 422 is according to a conventional six bolt design, which forces a minimum diameter for the first cylindrical wall 410b since the first cylindrical wall 410b extends around the mount 499. The adaptor is annular and has an L-shaped section around it. The adapter includes an annular portion 490a that extends radially of the hub axis and a cylindrical portion 490b coaxial with the hub axis. An outer circumferential surface of the cylindrical portion 490b has a diameter that is less than the internal diameter of the first cylindrical wall 410b and less than the external diameter of the mount 499. The annular portion 490a has holes in it located to align with bolt holes in the mount 499. The annular portion 490a is bolted to the mount 499 with bolts 413 extending through the holes therein into the bolt holes. In a conventional way, the holes in the mount 499 are threaded for engagement of the bolts 413. Thus, relative rotation about the hub axis of the adaptor and the mount 499, as well as axial movement, is prevented.

A portion (that is, mounting plate 10a) of the drive member part 410 that in some previously described embodiments was mounted directly onto a six bolt mount is now located against a head of the bolts 413. In variant embodiments the mounting plate 10a may be located against an annular surface of the annular portion 490a if the bolt heads are sunken, or in variant embodiments may be spaced from the bolt heads or said annular surface. As well as the drive member part 410 including parts corresponding to part 10b-f described above, the drive member part 410 includes an annular flange 410g coaxial with the hub axis, extending away from spokes of the wheel and around an exterior surface of the cylindrical portion 490b.

The cylindrical portion 490b and the annular flange 410g each include a respective stepped portion indicated together at 496. The step portions are shaped so that the step portion of the annular flange 410 sits on the step portion of the cylindrical portion 490b. The stepped portions 496 prevent axial movement of the drive member 410 towards spokes of the wheel. Also, the annular flange 410g includes a non-circumferential recess in the interior surface thereof and the cylindrical portion 490b has a corresponding non-circumferential projection 494. The projection 494 is configured to engage in the recess such that relative rotation about the hub axis of the adapter and the drive member 410 is prevented. Embodiments of the invention are not limited to use of the projection 494 and recess to prevent such relative rotation; in variant embodiments other ways may be implemented.

The cylindrical portion 490b also includes on an interior surface thereof a threaded portion, extending around the hub 422 and spaced from the hub 422. The lock ring 492 includes a cylindrical projection 492a, located between the hub 422 and the cylindrical portion 490b, that has a corresponding threaded portion in screw engagement with the threaded portion on the interior surface of the cylindrical portion 490b. The lock ring 492 also includes a radial flange 492b that abuts against an annular end of the cylindrical portion 490b. Thus, axial movement of the drive member 410, such as might result in rattle, is prevented by the annular flange 410g between tightly located between the radial flange 492b and the step portion of the cylindrical portion 490b. In variant embodiments, the lock ring 492 may be absent and an alternative way provided to secure the drive member part 410 to the adaptor.

The annular bearing assembly 414 is located around the cylindrical portion 490b and also against the annular portion 490a. The mounting member 412 includes a mounting member portion 412a mounted on the annular bearing assembly 414, extending around the bearing assembly 414 and fixed thereof. The bearing assembly 414 thus enables relative rotation of the mounting member 412 and the drive member 410.

The annular braking rotor portion 10f is fixed to the second cylindrical wall 10e with a fixation ring 498. The fixation ring 498, the second cylindrical wall 10e and the braking rotor portion 10f may be fixed together with adhesive or by welding, for example. Also shown in Figure 16 are the pinion bearing 416, the internal gear 410d, and the keyway 407 of the pinion gear 416 in which a drive shaft of the drive unit (not shown) engages.

The drive member part 410, the mounting member 412 and all parts other than the drive unit that mount on the mounting member 412 are assembled together in manufacture. The mounting member 412 is only attached to the drive member 410 via the annular bearing assembly 414. Lubricant may be provided between flush surfaces of the drive member 410 and the mounting member 412, and between the mounting member 412 and the fixation ring 498.

To mount the drive system onto the hub 422, first the adaptor 490a, 490b is bolted to the mount 499. The drive member 410 is then located over the adaptor, with step portions located together and the projection 494 located in the corresponding recess. The lock ring 492 is then screwed to attach it to the cylindrical portion 490b of the adaptor, thereby clamping the annular flange 410g between the step portion of the cylindrical portion 490b and the radial flange 492b. For use, the drive unit is attached by insertion of its drive shaft into the keyway 407. The drive unit is also prevented from rotating in a manner not illustrated in Figure 16 but in accordance with one of the rotation prevention methods described above in relation to other embodiments.

The adaptor usefully enables the bearing assembly 414 to be located other than in the recessed region, such that there is more space available there for the internal gear 410d and the pinion gear 416. This is particularly useful where the available space is constrained by the size of a mount in accordance with a conventional six bolt design (e.g. SHIMANO Deore Rear Hub 6 Bolt M525). Also, notably, a problem that arises when designing a drive system in which the bearing assembly 414 is located other than in the recessed region is that access to the bolt holes in the mount 499 becomes blocked. Provision of the adaptor as a separate piece to the drive member 410 addresses this, since the adaptor is first fixed to the mount 499 and then the drive member and other parts are fixed to the adaptor.

In variant embodiments, the annular portion 490a of the adaptor may be modified to mount on a disc rotor mount of an alternative design, including a centre lock design. Dimensions of other parts may be modified in view of different space constraints imposed by different mounts. Also, in variant embodiments, the annular portion 490a may be adapted to mount on a mount on a hub of a wheel for use with rim braking systems.

The drive system of any of the embodiments may be provided as a kit including a drive unit for retrofitting to a wheel of a bicycle, where the wheel has a hub including a suitable mount.

As will be apparent to the skilled person, various modifications may be made to the embodiments described above.

When used in this specification and claims, the terms "comprises" and "comprising" and variations thereof mean that the specified features, steps or integers are included. The terms are not to be interpreted to exclude the presence of other features, steps or components.

## Claims

1. Apparatus for connecting a drive unit (18) to a wheel (20) to enable the drive unit to drive rotation of the wheel (20) about a central axis of the wheel (20), wherein the wheel (20) includes a hub (22) and a rotor disc mounting means on the hub and wherein the rotor disc mounting means is suitable for attachment of a rotor disc of a disc braking system, the apparatus comprising:
a drive member (10) comprising means for mounting to the rotor disc mounting means, such that rotation of the drive member (10) about the central axis drives rotation of the hub (22) about the central axis;
a mounting member (12) mounted on the drive member (10) and rotatably independent of the drive member (10) with respect to the central axis;
a drive element (16) having a drive element axis that is fixedly disposed in relation to the mounting member (12), and for coupling to the drive unit such that the drive unit can drive rotation of the drive element about the drive element axis;
preventing means (15) for preventing rotation of the mounting member (12) about the central axis;
wherein the drive member (10) includes coupling means coupled with the drive element, such that the rotation of the drive element (16) drives the rotation of the drive member (10),
wherein the drive member (10) has a first side for facing away from the wheel when the drive member (10) is mounted on the wheel and
wherein the drive member (10) is for mounting in place of the rotor disc, **characterised in that** the coupling means and the drive element (16) are at least partially located in a recessed region in the first side.

2. The apparatus of claim 1, wherein the mounting member (12) is mounted on the drive member (10) such that, when the drive member (10) is mounted on the wheel, the drive member (10) is located between the mounting member (12) and spokes of the wheel

3. The apparatus of claim 2, wherein the recessed region (26) is a space set back towards the spokes, when the apparatus is mounted on the rotor disc mounting means, with respect to a plane where a surface of a disc rotor would be located that faces away from the spokes.

4. The apparatus of any one of claims 1 to 3, wherein the coupling means and the drive element (10) are coupled in the recessed region (26).

5. The apparatus of any one of the preceding claims, wherein the drive member (10) comprises at least one cylindrical wall extending circumferentially around the central axis, on which the coupling means is mounted.

6. The apparatus of any one of the preceding claims, wherein the drive element (16) comprises a first gear and the coupling means comprises a second gear for engaging with the first gear so that rotation of the first gear drives rotation of the drive member (10).

7. The apparatus of claim 6, wherein the second gear is an internal gear (12c) extending around the central axis, with teeth projecting inwardly and mounted on the at least one cylindrical wall.

8. The apparatus of claim 6, wherein the second gear extend around the central axis, with teeth projecting outwardly and mounted on the at least one cylindrical wall.

9. The apparatus of any one of claims 6 to 8, wherein the first gear is rotatably mounted on the mounting member (12).

10. The apparatus of any one of the preceding claims, wherein the mounting member (12) extends over an open side of the recessed region.

11. The apparatus of claim 1, wherein the drive member (10) includes a radially extending annular rotor disc portion configured for use with a calliper mechanism of the disc braking system, wherein the planar surface comprises a surface of the annular rotor disc portion.

12. The apparatus of any one of the preceding claims, further comprising a bearing assembly (14) between the drive member (10) and the mounting member (12), wherein the drive member (10) and the mounting member (12) are each fixed to the bearing assembly (14) enabling the mounting member (12) to be rotatably independent of the drive member (10) with respect to the central axis.

13. The apparatus of claim 12, wherein the bearing assembly (14) is at least partially located in the recessed region.

14. The apparatus of claim 6, wherein a drive shaft (34) of the drive unit (18) is engageable with and separable from the first gear and the drive unit (18) is engageable with and separable from the mounting member (12).

15. A method of connecting a drive unit (18) of a drive system to rotor disc mounting means on a hub (22) of a wheel (20), the drive system including:
a drive member (10) mounted to the rotor disc mounting means such that rotation of the drive member (10) about a central axis of the wheel (20) drives rotation of the hub (22) about the central axis, wherein the rotor disc mounting means is suitable for attachment of a rotor disc of a disc braking system;
a mounting member (12) mounted on the drive member (10) and rotatably independent of the drive member (10) with respect to the central axis;
a drive element (16) having a drive element axis parallel to the central axis, the drive element axis being fixedly disposed in relation to the mounting member (12), the system further including preventing means (15) for preventing rotation of the mounting member (12) about the central axis,
wherein the drive member (10) includes coupling means coupled with the drive element (16), such that the rotation of the drive element (16) drives the rotation of the drive member (10),
wherein the drive member (10) has a first side for facing away from the wheel when the drive member (10) is mounted on the wheel and wherein the coupling means and the drive element (16) are at least partially located in a recessed region in the first side; the method comprising:
attaching the drive unit (18) to the mounting member (12), including coupling a drive shaft (34) of the drive unit (18) to the drive element (16) such that rotation of the drive shaft (34) can drive the rotation of the drive element (16) about the drive element axis,
wherein the drive member (10) comprises means for mounting to rotor disc mounting means on the hub, and the drive member (10) is for mounting in place of the rotor disc.

## Patentansprüche

1. Vorrichtung zum Verbinden einer Antriebseinheit (18) mit einem Rad (20), um der Antriebseinheit zu ermöglichen, Drehung des Rads (20) um eine Mittelachse des Rads (20) anzutreiben, wobei das Rad (20) eine Nabe (22) und ein Rotorscheibenmontagemittel an der Nabe beinhaltet und wobei das Rotorscheibenmontagemittel zur Anbringung einer Rotorscheibe eines Scheibenbremssystems geeignet ist, wobei die Vorrichtung Folgendes umfasst:
ein Antriebsteil (10), das Mittel zum Montieren an dem Rotorscheibenmontagemittel umfasst, sodass Drehung des Antriebsteils (10) um die Mittelachse Drehung der Nabe (22) um die Mittelachse antreibt;
ein Montageteil (12), das an dem Antriebsteil (10) montiert und unabhängig von dem Antriebsteil (10) in Bezug auf die Mittelachse drehbar ist;
ein Antriebselement (16), das eine Antriebselementachse aufweist, die in Bezug auf das Montageteil (12) fest angeordnet ist, und zum Koppeln an die Antriebseinheit, sodass die Antriebseinheit Drehung des Antriebselements um die Antriebselementachse antreiben kann;
Verhinderungsmittel (15) zum Verhindern von Drehung des Montageteils (12) um die Mittelachse;
wobei das Antriebsteil (10) Kopplungsmittel beinhaltet, die mit dem Antriebselement gekoppelt sind, sodass die Drehung des Antriebselements (16) die Drehung des Antriebsteils (10) antreibt,
wobei das Antriebsteil (10) eine erste Seite zum Abwenden von dem Rad aufweist, wenn das Antriebsteil (10) an dem Rad montiert ist, und
wobei das Antriebsteil (10) zum Montieren anstelle der Rotorscheibe ist, **dadurch gekennzeichnet, dass** sich das Kopplungsmittel und das Antriebselement (16) zumindest teilweise in einer vertieften Region in der ersten Seite befinden.

2. Vorrichtung nach Anspruch 1, wobei das Montageteil (12) an dem Antriebsteil (10) montiert ist, sodass, wenn das Antriebsteil (10) an dem Rad montiert ist, sich das Antriebsteil (10) zwischen dem Montageteil (12) und Speichen des Rads befindet.

3. Vorrichtung nach Anspruch 2, wobei die vertiefte Region (26) ein Raum ist, der zu den Speichen zurückgesetzt ist, wenn die Vorrichtung an dem Rotorscheibenmontagemittel montiert ist, in Bezug auf eine Ebene, in der sich eine Oberfläche eines Scheibenrotors befinden würde, die von den Speichen abgewandt ist.

4. Vorrichtung nach einem der Ansprüche 1 bis 3, wobei das Kopplungsmittel und das Antriebselement (10) in der vertieften Region (26) gekoppelt sind.

5. Vorrichtung nach einem der vorhergehenden Ansprüche, wobei das Antriebsteil (10) zumindest eine zylindrische Wand umfasst, die sich umlaufend um die Mittelachse erstreckt, an der das Kopplungsmittel montiert ist.

6. Vorrichtung nach einem der vorhergehenden Ansprüche, wobei das Antriebselement (16) ein erstes Zahnrad umfasst und das Kopplungsmittel ein zweites Zahnrad zum Eingreifen mit dem ersten Zahnrad umfasst, sodass Drehung des ersten Zahnrads Drehung des Antriebsteils (10) antreibt.

7. Vorrichtung nach Anspruch 6, wobei das zweite Zahnrad ein Innenzahnrad (12c) ist, das sich um die Mittelachse erstreckt, wobei Zähne nach innen vorstehen und an der zumindest einen zylindrischen Wand montiert sind.

8. Vorrichtung nach Anspruch 6, wobei sich das zweite Zahnrad um die Mittelachse erstreckt, wobei Zähne nach außen vorstehen und an der zumindest einen zylindrischen Wand montiert sind.

9. Vorrichtung nach einem der Ansprüche 6 bis 8, wobei das erste Zahnrad drehbar an dem Montageteil (12) montiert ist.

10. Vorrichtung nach einem der vorhergehenden Ansprüche, wobei sich das Montageteil (12) über eine offene Seite der vertieften Region erstreckt.

11. Vorrichtung nach Anspruch 1, wobei das Antriebsteil (10) einen sich radial erstreckenden ringförmigen Rotorscheibenabschnitt beinhaltet, der zur Verwendung mit einem Bremssattelmechanismus des Scheibenbremssystems konfiguriert ist, wobei die ebene Oberfläche eine Oberfläche des ringförmigen Rotorscheibenabschnittes umfasst.

12. Vorrichtung nach einem der vorhergehenden Ansprüche, ferner umfassend eine Lagerbaugruppe (14) zwischen dem Antriebsteil (10) und dem Montageteil (12), wobei das Antriebsteil (10) und das Montageteil (12) jeweils an der Lagerbaugruppe (14) befestigt sind, wodurch ermöglicht wird, dass das Montageteil (12) unabhängig von dem Antriebsteil (10) in Bezug auf die Mittelachse drehbar ist.

13. Vorrichtung nach Anspruch 12, wobei sich die Lagerbaugruppe (14) zumindest teilweise in der vertieften Region befindet.

14. Vorrichtung nach Anspruch 6, wobei eine Antriebswelle (34) der Antriebseinheit (18) mit dem ersten Zahnrad in Eingriff bringbar und davon trennbar ist und die Antriebseinheit (18) mit dem Montageteil (12) in Eingriff bringbar und davon trennbar ist.

15. Verfahren zum Verbinden einer Antriebseinheit (18) eines Antriebssystems mit Rotorscheibenmontagemitteln an einer Nabe (22) eines Rads (20), wobei das Antriebssystem Folgendes beinhaltet:
ein Antriebsteil (10), das an dem Rotorscheibenmontagemittel montiert ist, sodass Drehung des Antriebsteils (10) um eine Mittelachse des Rads (20) Drehung der Nabe (22) um die Mittelachse antreibt, wobei das Rotorscheibenmontagemittel zur Anbringung einer Rotorscheibe eines Scheibenbremssystems geeignet ist;
ein Montageteil (12), das an dem Antriebsteil (10) montiert und unabhängig von dem Antriebsteil (10) in Bezug auf die Mittelachse drehbar ist;
ein Antriebselement (16), das eine Antriebselementachse parallel zu der Mittelachse aufweist, wobei die Antriebselementachse in Bezug auf das Montageteil (12) fest angeordnet ist, wobei das System ferner Verhinderungsmittel (15) zum Verhindern von Drehung des Montageteils (12) um die Mittelachse beinhaltet,
wobei das Antriebsteil (10) Kopplungsmittel beinhaltet, die mit dem Antriebselement (16) gekoppelt sind, sodass die Drehung des Antriebselements (16) die Drehung des Antriebsteils (10) antreibt,
wobei das Antriebsteil (10) eine erste Seite zum Abwenden von dem Rad aufweist, wenn das Antriebsteil (10) an dem Rad montiert ist, und wobei sich das Kopplungsmittel und das Antriebselement (16) zumindest teilweise in einer vertieften Region in der ersten Seite befinden;
wobei das Verfahren Folgendes umfasst:
Anbringen der Antriebseinheit (18) an dem Montageteil (12), beinhaltend Koppeln einer Antriebswelle (34) der Antriebseinheit (18) an das Antriebselement (16), sodass Drehung der Antriebswelle (34) die Drehung des Antriebselements (16) um die Antriebselementachse antreiben kann,
wobei das Antriebsteil (10) Mittel zum Montieren an Rotorscheibenmontagemitteln an der Nabe umfasst und das Antriebsteil (10) zum Montieren anstelle der Rotorscheibe ist.

## Revendications

1. Appareil destiné à raccorder une unité d'entraînement (18) à une roue (20) de manière à permettre à l'unité d'entraînement d'entraîner en rotation la roue (20) autour de l'axe central de la roue (20), ladite roue (20) comprenant un moyeu (22) et un moyen de montage de disque de rotor sur le moyeu et ledit moyen de montage de disque de rotor étant approprié pour la fixation d'un disque de rotor d'un système de freinage à disque, l'appareil comprenant :
un élément d'entraînement (10) comprenant un moyen de montage sur le moyen de montage de disque de rotor, de sorte que la rotation de l'élément d'entraînement (10) autour de l'axe central entraîne la rotation du moyeu (22) autour de l'axe central ;
un élément de montage (12) monté sur l'élément d'entraînement (10) et pouvant tourner indépendamment de l'élément d'entraînement (10) par rapport à l'axe central ;
un élément d'entraînement (16) comportant un axe d'élément d'entraînement qui est disposé de manière fixe par rapport à l'élément de montage (12), et destiné à être couplé à l'unité d'entraînement de sorte que l'unité d'entraînement puisse entraîner la rotation de l'élément d'entraînement autour de l'axe de l'élément d'entraînement ;
un moyen de prévention (15) destiné à empêcher la rotation de l'élément de montage (12) autour de l'axe central ;
ledit élément d'entraînement (10) comprenant un moyen d'accouplement couplé à l'élément d'entraînement, de sorte que la rotation de l'élément d'entraînement (16) entraîne la rotation de l'élément d'entraînement (10),
ledit élément d'entraînement (10) comportant un premier côté destiné à être orienté à l'opposé de la roue lorsque l'élément d'entraînement (10) est monté sur la roue et
ledit élément d'entraînement (10) étant destiné à être monté à la place du disque de rotor, **caractérisé en ce que** le moyen d'accouplement et l'élément d'entraînement (16) sont au moins partiellement situés dans une zone évidée dans le premier côté.

2. Appareil selon la revendication 1, ledit élément de montage (12) étant monté sur l'élément d'entraînement (10) de sorte que, lorsque l'élément d'entraînement (10) est monté sur la roue, l'élément d'entraînement (10) soit situé entre l'élément de montage (12) et les rayons de la roue.

3. Appareil selon la revendication 2, ladite zone évidée (26) étant un espace en retrait vers les rayons, lorsque l'appareil est monté sur le moyen de montage de disque de rotor, par rapport à un plan où une surface d'un rotor de disque serait située qui serait orientée à l'opposé des rayons.

4. Appareil selon l'une quelconque des revendications 1 à 3, ledit moyen d'accouplement et ledit élément d'entraînement (10) étant couplés dans la zone évidée (26).

5. Appareil selon l'une quelconque des revendications précédentes, ledit élément d'entraînement (10) comprenant au moins une paroi cylindrique s'étendant de manière circonférentielle autour de l'axe central, sur laquelle le moyen d'accouplement est monté.

6. Appareil selon l'une quelconque des revendications précédentes, ledit élément d'entraînement (16) comprenant un premier engrenage et ledit moyen d'accouplement comprenant un second engrenage destiné à venir en prise avec le premier engrenage de sorte que la rotation du premier engrenage entraîne la rotation de l'élément d'entraînement (10).

7. Appareil selon la revendication 6, ledit second engrenage étant un engrenage interne (12c) s'étendant autour de l'axe central, des dents faisant saillie vers l'intérieur et étant montées sur ladite au moins une paroi cylindrique.

8. Appareil selon la revendication 6, ledit second engrenage s'étendant autour de l'axe central, des dents faisant saillie vers l'extérieur et étant montées sur ladite au moins une paroi cylindrique.

9. Appareil selon l'une quelconque des revendications 6 à 8, ledit premier engrenage étant monté rotatif sur l'élément de montage (12).

10. Appareil selon l'une quelconque des revendications précédentes, ledit élément de montage (12) s'étendant sur un côté ouvert de la zone évidée.

11. Appareil selon la revendication 1, ledit élément d'entraînement (10) comprenant une partie de disque de rotor annulaire s'étendant radialement conçue pour être utilisée avec un mécanisme d'étrier du système de freinage à disque, ladite surface plane comprenant une surface de la partie de disque de rotor annulaire.

12. Appareil selon l'une quelconque des revendications précédentes, comprenant en outre un ensemble de palier (14) entre l'élément d'entraînement (10) et l'élément de montage (12), ledit élément d'entraînement (10) et ledit élément de montage (12) étant chacun fixés à l'ensemble de palier (14) permettant à l'élément de montage (12) de pouvoir tourner indépendamment de l'élément d'entraînement (10) par rapport à l'axe central.

13. Appareil selon la revendication 12, ledit ensemble de palier (14) étant au moins partiellement situé dans la zone évidée.

14. Appareil selon la revendication 6, un arbre d'entraînement (34) de l'unité d'entraînement (18) pouvant être mis en prise avec le premier engrenage et pouvant être séparé de celui-ci et ladite unité d'entraînement (18) pouvant être mise en prise avec l'élément de montage (12) et pouvant être séparée de celui-ci.

15. Procédé de raccordement d'une unité d'entraînement (18) d'un système d'entraînement à un moyen de montage de disque de rotor sur un moyeu (22) d'une roue (20), le système d'entraînement comprenant :
un élément d'entraînement (10) monté sur le moyen de montage de disque de rotor de sorte que la rotation de l'élément d'entraînement (10) autour de l'axe central de la roue (20) entraîne la rotation du moyeu (22) autour de l'axe central, ledit moyen de montage de disque de rotor étant approprié pour la fixation d'un disque de rotor d'un système de freinage à disque ;
un élément de montage (12) monté sur l'élément d'entraînement (10) et pouvant tourner indépendamment de l'élément d'entraînement (10) par rapport à l'axe central ;
un élément d'entraînement (16) comportant un axe d'élément d'entraînement parallèle à l'axe central, l'axe de l'élément d'entraînement étant disposé de manière fixe par rapport à l'élément de montage (12), le système comprenant en outre un moyen de prévention (15) destiné à empêcher la rotation de l'élément de montage (12) autour de l'axe central,
ledit élément d'entraînement (10) comprenant un moyen d'accouplement couplé à l'élément d'entraînement (16), de sorte que la rotation de l'élément d'entraînement (16) entraîne la rotation de l'élément d'entraînement (10),
ledit élément d'entraînement (10) comportant un premier côté destiné à être orienté à l'opposé de la roue lorsque l'élément d'entraînement (10) est monté sur la roue et ledit moyen d'accouplement et ledit élément d'entraînement (16) étant au moins partiellement situés dans une zone évidée dans le premier côté ;
le procédé comprenant :
la fixation de l'unité d'entraînement (18) à l'élément de montage (12), y compris l'accouplement d'un arbre d'entraînement (34) de l'unité d'entraînement (18) à l'élément d'entraînement (16) de sorte que la rotation de l'arbre d'entraînement (34) puisse entraîner la rotation de l'élément d'entraînement (16) autour de l'axe de l'élément d'entraînement,
ledit élément d'entraînement (10) comprenant un moyen de montage sur un moyen de montage de disque de rotor sur le moyeu, et ledit élément d'entraînement (10) étant destiné à être monté à la place du disque de rotor.
